# FASCICULE DE BREVET EUROPEEN

(11) **EP 0 573 681 B1**
(45) Date de publication et mention de la délivrance du brevet: **29.04.1998**
(21) Numéro de dépôt: 92109634.3
(22) Date de dépôt: 09.06.1992
(51) Int. Cl.: A01B 39/16, A01B 13/06, A01G 17/00

(54) **Dispositif de détection de plantes par palpeur chargé de délivrer un signal électrique**
Fühlvorrichtung für Pflanzen mit einem,ein elektrisches Signal,liefernden Fühler
Plant detecting device with feeler delivering electrical signal

(43) Date de publication de la demande: 15.12.1993
(73) Titulaire: Belhomme, Gèrard, D-54516 Wittlich (DE)
(72) Inventeur: Belhomme, Gèrard, D-54516 Wittlich (DE)
(74) Mandataire: Viard, Jean

(56) Documents cités:
- EP-A- 0 399 137
- DE-A- 2 103 520
- DE-A- 3 825 793
- DE-A- 3 900 288
- DE-U- 9 114 640

## Description

L'invention concerne un dispositif de détection de plantes par palpeur chargé de délivrer un signal électrique agissant sur l'organe de commande d'un récepteur hydraulique , pneumatique, ou électrique afin d'actionner le pivot d'entrainement duquel est rendu solidaire l'organe de travail d'un appareil du type interceps , décavaillonneuse , applicateur d'herbicide ou de tout autre appareil utilisé pour l'entretien des plantes ou des intervalles entre plantes de plantations ou de cultures en ligne telles que vignes , vergers , pépinières , mais , tabac ,etc.....

Les appareils connus de ce genre,conçus de facon à ce qu'un organe de travail contourne la plante de laquelle il s'approche pour s'engager sans tarder dans l'intervalle formé avec la plante qui succéde , présentent de manière traditionnelle un palpeur qui, au contact d'un sujet , sollicite un distributeur hydraulique afin de piloter un vérin qui actionne un pivot d'entrainement duquel est rendu solidaire un organe de travail.

Bien que le fonctionnement de ce type d'appareil soit satisfaisant dans les plantations où la maturité des plants leur offre une rigidité suffisante , on travaille trés difficilement entre les jeunes plants qui cèdent en se couchant à l'effort du palpeur.

L'électrovanne de fonction connue s'offre trés avantageusement au remplacement du distributeur hydraulique ,puisque l'électro-aimant libére le plant de l'effort que doit exercer le palpeur sur le tiroir du distributeur hydraulique pour permettre à l'organe de travail de contourner le plant.

On connaît déjà des appareils pour lesquels sont proposés des dispositifs de détection de plantes par palpeur qui délivrent un signal électrique. D'une manière commune, DE 40 40 843 C2, FR-A-2 596 245 et DE-U-9114640.2, décrivent des appareils aussi dotés d'un dispositif de détection par palpeur délivrant un signal électrique agissant sur l'électrovanne de commande d'un vérin hydraulique actionnant un pivot d'entraînement qui cherche à déplacer l'organe de travail afin qu'il contourne la plante dont il s'approche.

On observe également que les dispositifs de détection proposés par chacune de ces conceptions comprend d'une manière commune :
- un convertisseur délivrant un signal électrique,
- un organe moteur prolongé d'un palpeur chargé de détecter les plants,
- un axe autour duquel l'ensemble maneton-palpeur peut basculer,
- un transmetteur d'effort solidaire du maneton ou, partie de ce dernier, pouvant solliciter le convertisseur,
- une butée de positionnement contre laquelle le maneton est maintenu à sa position de repos,
- un dispositif de rappel permettant de ramener et de maintenir le maneton à sa position de repos,
- une butée limitant le déplacement angulaire du maneton lorsqu'il s'éloigne de sa position de repos,
- un support dont sont solidaires l'axe de l'organe moteur, une partie des moyens limitant la course de l'organe moteur, et à partir duquel s'exerce le dispositif de rappel.

Sur les appareils décrits par DE 40 40 843 C2 et FR-A-2 596 245, on apprécie la rapidité de réaction de l'électrovanne qui permet à l'organe de travail de s'effacer sans attendre quand le palpeur détecte le plant, mais on observe, qu'elle communique au lâcher du plant, une forte accélération à l'axe autour duquel bascule l'organe moteur prolongé du palpeur puisqu'il est avantageusement rendu solidaire du pivot d'entraînement de l'organe de travail, mais aussi d'une manière moins favorable, déporté par rapport à ce dernier. Cette accélération qui s'exprime contre la masse de l'organe moteur prolongé par le palpeur arrive à rompre l'équilibre fragile de cet ensemble, de telle façon que le palpeur se trouve alternativement rappelé d'un sens à sa position repos par son organe de rappel et repoussé sans attendre dans l'autre sens par l'effet de l'accélération sur sa propre masse. Les permutations du contacteur s'alternent pour interdire à l'organe de travail de retrouver sa position initiale sur le rang et donc toute utilisation de l'appareil.

En supprimant cet effet, on constate de surcroît qu'au moment où l'organe de travail atteint sa position fin de course, il provoque le rebond du maneton sur la butée qui limite en position repos sa rotation autour de son axe pour donner naissance à de nouvelles permutations alternées du contacteur qui se perpétuent jusqu'à ce que le palpeur calme son balancement au contact d'un nouveau sujet.

DE-U-9114640.2 qui montre les caractéristique du préambule de la revendication 1 décrit lui aussi un appareil doté d'un dispositif de détection de plantes par palpeur qui délivre au moyen ici d'un détecteur de proximité, un signal agissant sur l'électrovanne de commande d'un vérin hydraulique actionnant un pivot d'entraînement à l'extrémité duquel est fixé un outil aratoire. De manière très caractérisée, l'axe autour duquel peut basculer l'organe moteur prolongé par son palpeur est, sur ce dispositif, rendu solidaire du bâti dans lequel est également maintenu et guidé le pivot d'entraînement de l'organe de travail, et non pas solidaire d'un support solidaire du pivot d'entraînement de l'organe de travail.

Le palpeur de commande est maintenu au repos par un ressort préalablement tendu, monté pivotant dans le bâti de manière à pouvoir pivoter dans le sens opposé à celui de la force du ressort prétendu. Ce choix a pour conséquence l'augmentation du délai de délivrance du signal qui doit permuter le circuit de l'électrovanne lorsque le palpeur échappe au plant, c'est à dire, lorsque l'organe de travail, après avoir contourné la plante, recherche en vain à s'engager dans l'espace formé avec le plant qui succède.

L'augmentation de ce délai explique la présence d'un long îlot non travaillé derrière le plant que l'organe de travail vient de contourner avec nonchalance.

L'un des buts visés de l'invention est de remédier à ces problèmes afin d'améliorer le fonctionnement des dispositifs de détection de plantes décrit dans le préambule de la revendication 1 pour permettre leur travail entre les jeunes plants.

Un autre but visé de l'invention est de proposer un dispositif conçu de manière à rendre son adaptation possible sur des appareils de différentes fabrications en remplacement des dispositifs déjà existants.

Un autre but visé de l'invention est de permettre le réglage de la sensibilité de détection par un système commandé depuis le poste de pilotage du véhicule agricole par lequel sont mus les appareils décrits dans le préambule de la revendication 1.

Selon l'invention, le dispositif de détection de plantes par palpeur selon le préambule de la revendication 1 est caractérisé en ce qu'il comprend en outre :
- un organe récepteur fixé sur un moyen de fixation pivotant avec le pivot d'entraînement et duquel sont solidaires le convertisseur et un des moyens positionnant l'organe moteur au repos, et sur lequel agit au moins une partie des moyens du rappel, l'orgae moteur étant monté pivotant sur ce moyen de fixation,
- un amortisseur de fin de course rétractable permettant d'absorber l'énergie cinétique libérée par l'ensemble organe moteur et palpeur quand il retrouve sa position de repos, des cavités étant prévues pour recevoir l'amortisseur dans l'organe moteur et dans l'organe récepteur.
- des moyens permettant d'ajuster la sensibilité du dispositif de détection.

L'un des buts visés de l'invention est de remédier à ces problèmes afin d'améliorer le fonctionnement des dispositifs de détection de plantes décrits dans le préambule de la revendication 1 pour permettre leur travail entre les jeunes plants.

Un autre but visé de l'invention est de proposer un dispositif d'une forme choisie de manière à rendre son adaptation possible sur des appareils de différentes fabrication en remplacement des dispositifs de détection déjà existants.

Un autre but visé de l'invention est de permettre le réglage de la sensibilité de détection par un systéme commandé depuis le poste de pilotage du véhicule agricole par lequel sont mûs les appareils décrits dans le préambule de la revendication 1.

Le dispositif objet de l'invention se présente comme un bloc compact de forme cylindrique caractérisé par le fait qu'il est placé sensiblement sur le même axe que le pivot asservi à son signal et autour duquel pivote l'organe de travail afin de s effacer.Il comprend:
un palpeur,un organe moteur,un organe récepteur,un transmetteur d'effort,un capteur d'effort,un organe d'accouplement,un limiteur de course,un dispositif de positionnement angulaire rétractable,un dispositif de rappel,un amortisseur de fin de course,un dispositif de réglage de sensibilité,un protecteur,un obturateur,et une flasque d'appui.

L'invention va maintenant être décrite plus en détail en se référant à un mode de réalisation particulier cité à titre d'exemple non limitatif et représenté sur les dessins annexés dans lesquels:

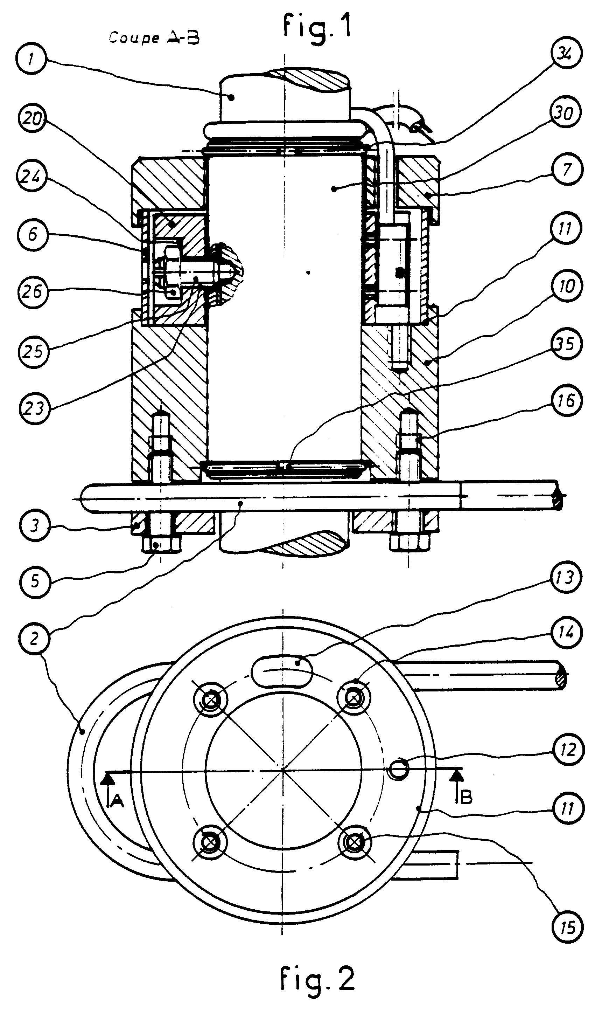

La fig.1 représente en coupe le dispositif objet de l'invention , fixé autour d'un pivot d'entrainement (1).
La fig. 2 représente une vue de dessus de l'organe moteur à la partie inférieure duquel le palpeur est fixé.

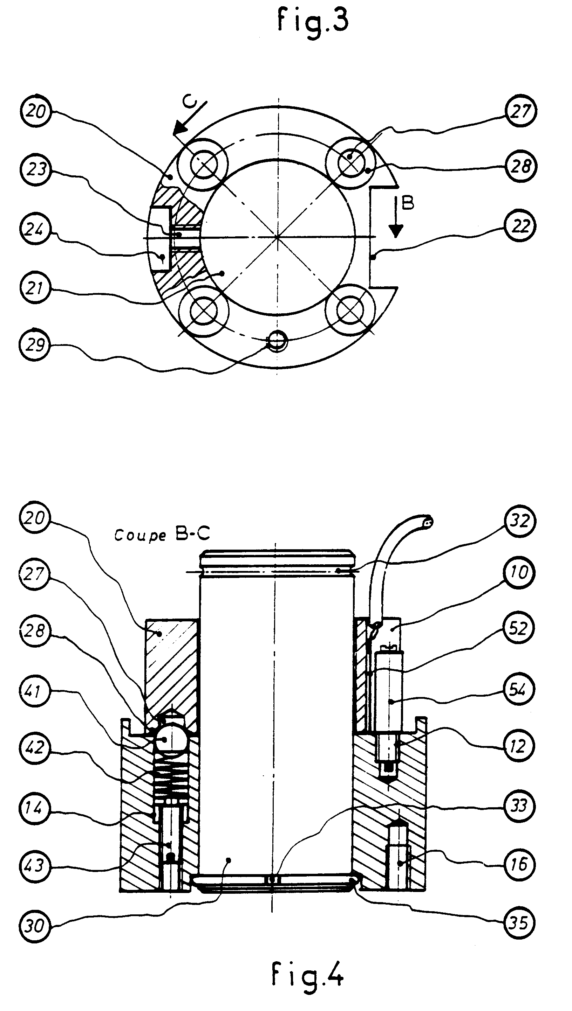

La fig. 3 montre l'organe récepteur en vue de dessous et notamment les orifices de centrage (27) ainsi leurs faconnages obliques (28)
La fig.4 montre par une vue en coupe selon l'axe brisé B-C (fig.3) notamment les moyens (27,28,41,42,14) communs aux dispositifs de rappel,de positionnement angulaire et à l'amortisseur de fin de course.

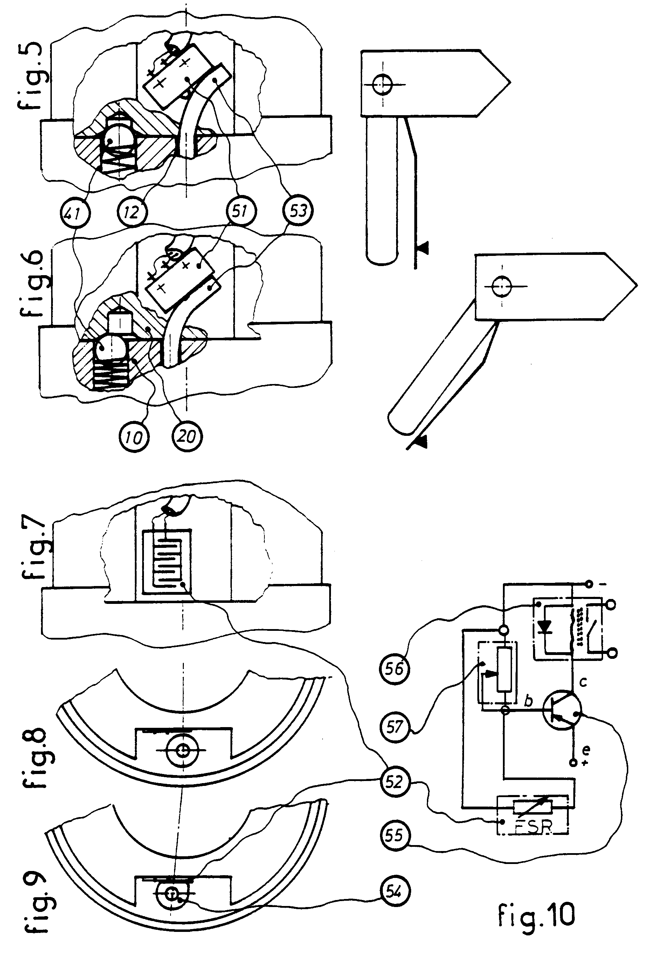

La fig.5 représente en éclaté l'organe moteur calé en position repos par rapport à l'organe récepteur .
La fig.6 montre le transmetteur d'effort ,ici le brin élastique (53) agissant sur le capteur d'effort ,ici le contacteur(51)., ainsi que le dispositif de rappel en action.
La fig.7 montre la résistance tactile (52).
Les fig.8 et 9 montrent le transmetteur d'effort,ici le diffuseur élastique (54), successivement en position repos , puis en action sur la résistance tactile FSR (52).
La fig.10 représente schématiquement le branchement des différents éléments qui permettent le réglage de sensibilité du dispositif de détection à distance.

L'organe moteur (10) et l'organe récepteur (20) sont placés autour d'un organe d'accouplement (30) qui se présente sous la forme d'un manchon creux lui même placé autour du pivot d'entrainement (1). Immobilisé en translation à l'organe d'accouplement (30)au moyen d'un jonc (35),l'organe moteur (10) montre à sa partie supérieure un lamage (11) servant à centrer un protecteur tubulaire (6) qui enveloppe et protège l'organe récepteur superposé à l'organe moteur (10).

Un obturateur (7) placé autour de l'organe d'accouplement (30) et en appui sur le protecteur tubulaire (6) qu'il vient coiffé, est verrouillé en translation par un autre jonc(34) arrêté dans la gorge supérieure que lui offre l'organe d'accouplement(30).

Une flasque d'appui (3) en forme de couronne traversée par le pivot d'entrainement de l'organe de travail et de quatre vis serrées (5) dans les orifices taraudés (16) que lui présente la surface inférieure et plane de l'organe moteur (10) ,comprime contre celle -ci le palpeur (2) qui montre une partie cintrée en forme de " r " pour contourner ainsi le pivot d'entrainement(1) de l'organe de travail.

L'organe récepteur (20) présente un large orifice concentrique (21) prévu afin d'être traversé par l'organe d'accouplement (30) duquel il sera rendu solidaire.Sa paroie enveloppante offre une large rainure (22) au fond de laquelle est prévue la fixation d'un capteur d'effort,et de manière diamètralement opposée,un orifice taraudé (23) élargi d'un profond lamage (24).

Une vis (25) qui traverse l'organe d'accouplement (30) par un orifice prévu à cet effet et freinée par un contre écrou (26) lui même bloqué au fond du lamage (24) fixe l'organe d'accouplement (30) ainsi que l'organe récepteur (20) au pivot d'entrainement(1)

Selon un des modes de réalisation,le capteur d'effort qui permute le circuit de commande de l'électrovanne,est un contacteur (51), sollicité par un transmetteur d'effort qui d'une manière propre à l'invention se présente comme un brin élastique et souple (53), qui se déforme lorsqu'il sollicite le contacteur (51). Il est possible de cette manière de permettre le déplacement angulaire de l'organe moteur (10) dans l'orifice taraudé (12) duquel le brin élastique est vissé, par rapport à l'organe récepteur (20) auquel est fixé le contacteur (51).

Par un autre mode de réalisation propre à l'invention,le capteur d'effort est une résistance caractérisé par le fait que la valeur du courant qui la traverse est subordonné à un effort exercé sur le palpeur.D'une manière avantageuse ,cette résistance est une résistance tactile (52) qui réagit à l'action d'un transmetteur d'effort approprié ici le diffuseur élastique (54), qui transforme le couple de l'organe moteur né de l'effort exercé sur le palpeur, en pression qu'il tente de répartir en se déformant sur la surface active de la résistance tactile (52) qui voit sa résistivité diminuer quand la pression qu'elle percoit augmente,ce qui permet déjà à l'effort de détection d'etre mesuré avant d'etre plus tard ajusté.

Le dispositif de positionnement angulaire escamotable qui câle l'organe moteur par rapport à l'organe récepteur à la bissection du balayage angulaire que lui tolère le limiteur de course,ainsi que le transmetteur d'effort à sa position de veille au regard du capteur d'effort,présente quatre mécanismes de verrouillage qui d'une manière caractéristique à l'invention sont réciproquement intégrés au corps de l'organe moteur ainsi qu'à celui de l'organe récepteur , et que les moyens utilisés pour leur réalisation comprennent au moins : un orifice de guidage ,un organe de mise en pression ,un organe de liaison ,un orifice de centrage ,un moyen de réglage.

Selon un mode de réalisation de l'invention l'orifice de guidage est obtenu par un percage (14) du corps de l'organe moteur dans lequel est placé et guidé un organe de mise en pression ,par exemple un ressort (42).Au fond de cet orifice (14) est prévu un autre orifice taraudé pour recevoir l'organe de réglage,ici une vis (43).L'organe de liaison,par exemple une bille (41) pénètre en partie l'organe récepteur (20) par un orifice de centrage qui se présente comme une amorce de percage (27) réalisé dans le corps de l'organe récepteur (20) . La bille (41) est ainsi maintenue en appui sur l'amorce de percage (27) d'un diamètre choisi inférieur à celui de la bille qui pénètre au moins de son autre moitié le percage (14) qui la guide.Par action sur les organes de réglages ici les vis (43),modifie la pression de la bille sur son orifice de centrage qu'elle quitte plus ou moins difficelement.L'effort à exercer sur le palpeur peut etre ainsi ajusté.

Par un autre mode de réalisation de l'invention,la sensibilité du dispositif décrit dans le préambule de la revendication 1 peut etre ajustée pendant le travail des appareils et de manière avantageuse depuis le poste de pilotage du véhicule par lequel les appareils sont tractés.Cet autre but est obtenu par l'utilisation propre à l'invention de l'effet cumulatif d'un premier courant, dont la valeur est subordonnée à l'effort exercé sur un palpeur, avec un deuxième courant d'une valeur choisie arbitrairement et visant à augmenter ou à diminuer l'effort à exercer sur ce palpeur afin de délivrer un signal électrique du type de celui décrit dans préambule de la revendication 1.
Selon une forme de réalisation de l'invention,on laisse agir à la base d'un transistor (55) le premier courant dont la valeur est bien subordonnée à l'effort exercé sur le palpeur , comme c'est le cas de celui qui traverse la résistance tactile (52) lorsqu'elle est sollicitée à la pression par le transmetteur d'effort.A la base de ce meme transistor (55) on laisse également agir un deuxième courant d'une valeur choisie ajustée au moyen d' un potentiomètre (57).Le courant libéré au collecteur du transitor (55) sert de courant d'excitation au relais (56) chargé de commander l'électrovanne.Lorsque la somme des courants de la base atteint une valeur arbitrairemnt choisie,la valeur du courant de collecteur excite le relais qui commande l'electrovanne.Il suffit d'agir sur le potentiomètre (57) pour ajuster la valeur du courant que devra laisser passer la résistance tactile (52) pour provoquer l'excitation du relais (56) et donc l'effort à exercer sur le palpeur pour produire le signal.

D'une manière propre à l'invention,il est permis au dispositif de rappel et à l'amortisseur de fin de course de produire l'effet attendu de chacun d'eux,en utilisant les memes moyens que ceux du dispositif de positionnement angulaire .

D'une manière caractéristique à l'invention , et par l'opportunité offerte par le fait que ces dispositifs soient sollicités de facon asynchrone,on utilise ces memes moyens en modifiant par contre leurs effets.Au premier effet de verrouillage produit par ces moyens,on ajoute l'effet de rappel et celui d'asorption d'inertie par un aménagemnt adapté de la surface périphérique à l'orifice de centrage (27),et caractérisé par le fait que cette surface est oblique .Selon un mode de réalisation préférentiel de l'invention cette surface oblique est un chanfrein (28).

Ces moyens communs agissent de la manière suivante:
En position repos , la bille (41) siége sur l'arete qui délimite l'amorce de percage (28) du chanfrein (28) . Par un effort exercé sur le palpeur , la bille bascule dans un premier temps autour de cette arete , pour retrouver appui contre la surface oblique du chanfrein (28) , sur laquelle elle se déplace jusqu'á ce que la réaction du ressort l'oblige à s'immobiliser.Lorsqu'on lâche le palpeur , la réaction du plan oblique qu'offre le chanfrein (28) produit l'effet de rappel attendu , le transmetteur d'effort cesse son action sur le capteur d'effort qui permute le signal et provoque la rotation du pivot .Lorsque l'organe d'entrainement cesse sa course,le pivot cesse brutalement sa rotation.

Précisément à cet instant , la masse du palpeur et celle de l'organe moteur s'exprime sur la bille qui cherche à s'échapper par l'autre côté de son siège qu'elle venait de regagner.

Sollicité de manière diamétralement opposée,la surface oblique du chanfrein (28) réagit cette fois sur l'autre face de la bille pour produire l'effet attendu de l'amortisseur de fin de course qui absorbe l'impulsion et réussi à ramener définitivement la bille qui s'immobilise enfin sur son siège à l'attente d'un nouveau cycle.

La rotation de l'organe moteur qui par l'effort exercé sur le palpeur tourne autour de l'organe d'accouplement ,est réduite à un déplacement angulaire que lui tolère le limiteur de course réalisé au moyen d'une vis non représentée,fixée à l'organe récepteur (20) dans un orifice taraudé (298).Elle pénètre de sa tete cylindrique une mortaise (13) fraisée dans le corps de l'organe moteur (13)

## Revendications

1. Dispositif de détection de plantes par palpeur chargé de délivrer un signal électrique agissant sur l'organe de commande d'un récepteur hydraulique, pneumatique ou électrique actionnant un pivot d'entraînement (1) de l'organe de travail de tout appareil utilisé pour l'entretien des plantes ou des intervalles entre plantes dans toute plantation ou culture en ligne, comprenant :
- un convertisseur (51, 52) délivrant un signal électrique,
- un organe moteur (10) prolongé par un palpeur (2),
- un transmetteur d'effort (53) solidaire de l'organe moteur (10) permettant de solliciter le convertisseur (51, 52),
- un dispositif de positionnement permettant de caler l'organe moteur (10) en position de repos,
- un dispositif de rappel permettant de ramener l'organe moteur (10) en position de repos,
- un limiteur de course (13, 29) limitant le déplacement angulaire de l'organe moteur (10) lorsqu'il s'éloigne de sa position de repos,
- un obturateur (7),
- un protecteur (6), et
- un flasque d'appui (3),
caractérisé en ce qu'il comprend en outre
- un organe récepteur (20) fixé sur un moyen de fixation (30) pivotant avec le pivot d'entraînement (1) et duquel sont solidaires le convertisseur (51 ou 52) et un des moyens (27) positionnant l'organe moteur (10) au repos, et sur lequel agit au moins une partie des moyens du rappel (28), l'organe moteur (10) étant monté pivotant sur ce moyen de fixation (30),
- un amortisseur de fin de course (14, 42, 41, 28) rétractable permettant d'absorber l'énergie cinétique libérée par l'ensemble organe moteur et palpeur quand il retrouve sa position de repos, des cavités (14, 27) étant prévues pour recevoir l'amortisseur dans l'organe moteur (10) et dans l'organe récepteur (20),
- des moyens (16, 43, 55, 57) permettant d'ajuster la sensibilité du dispositif de détection.

2. Dispositif selon la revendication 1, caractérisé en ce que le moyen de fixation (30) est un un organe d'accouplement (30) entre le pivot (1) l'organe moteur (10), et l'organe récepteur (20) coaxial avec ces derniers.

3. Dispositif selon les revendications 1 et 2, caractérisé en ce que le dispositif de rappel ainsi que l'amortisseur de fin de course utilisent les mêmes moyens (14, 42, 41, 28).

4. Dispositif selon la revendication 3, caractérisé en ce que lesdits moyens présentent au moins un orifice de guidage (14), un organe de mise en pression (42) et un organe de liaison (41) en appui sur un surface oblique (28).

5. Dispositif selon l'une des revendications 1 à 4, caractérisé en ce que le dispositif de positionnement utilise au moins un organe de mise en pression (42) et un organe de liaison (41) qui pénètre dans l'organe moteur (10) et l'organe récepteur (20).

6. Dispositif selon la revendication 1, caractérisé en ce que l'organe récepteur (20) propose un orifice taraudé (23) servant à fixer le dispositif de détection au pivot d'entraînement (1) de l'organe de travail.

7. Dispositif selon la revendication 1, caractérisé en ce que le transmetteur d'effort (53 ou 54) est élastique, et qu'il se déforme pour solliciter le convertisseur (51 ou 52).

8. Dispositif selon la revendication 1, caractérisé par le fait que le convertisseur est une résistance (52) qui voit la valeur du courant qui la traverse varier lorsque la pression qu'exerce sur elle le diffuseur (54) varie.

9. Dispositif selon les revendications 1 à 8, caractérisé en ce que l'on utilise au moins l'effet cumulatif du premier courant traversant la résistance (52) et d'un second courant dont la valeur peut être ajustée arbitrairement au moyen d'un potentiomètre (57) pour augmenter ou diminuer l'effort à exercer sur le palpeur afin de délivrer un signal électrique agissant sur l'organe de commande.

## Claims

1. A device for detecting plants by a feeler for delivering an electric signal that acts on the control member of a hydraulic, pneumatic, or electric receiver actuating a drive pivot (1) of the working member of any apparatus used for attending to plants or to the gaps between plants in any plantation or crop in rows, the device comprising:
• a converter (51, 52) delivering an electric signal;
• a drive member (10) extended by a feeler (2);
• a force transmitter (53) secured to the drive member (10) and enabling a force to be applied to the converter (51, 52);
• a positioning device enabling the drive member (10) to be set in a rest position;
• a return device enabling the drive member (10) to be returned to its rest position;
• a stroke limiter (13, 29) limiting the angular displacement of the drive member (10) when it moves away from its rest position;
• a shutter (7);
• a protector (6); and
• a bearing end plate (3);
the device being characterized in that it further comprises a receiver member (20) fixed on fixing means (30) pivoting with the drive pivot (1) and with which the converter (51, 52) and one of the means (27) for positioning the drive member (10) at rest are secured, and on which there acts at least a portion of the return means (28), the drive member (10) being pivotally mounted on said fixing means (30);
a retractable end-of-stroke damper (14, 42, 41, 28) enabling the kinetic energy released by the assembly constituted by the drive member and the feeler on returning to its rest position to be absorbed, cavities (14, 27) being provided to receive the damper in the drive member (10) and in the receiver member (20); and
means (16, 43, 55, 57) enabling the sensitivity of the detector device to be adjusted.

2. A device according to claim 1, characterized in that the fixing means (30) is a coupling member (30) between the pivot (1), the drive member (10), and the receiver member (20) that is coaxial therewith.

3. A device according to claims 1 and 2, characterized in that the return device and the end-of-stroke damper make use the same means (14, 42, 41, 28).

4. A device according to claim 3, characterized in that said means have at least one guide orifice (14), a pressurizing member (42), and a link member (41) bearing against a sloping surface (28).

5. A device according to any one of claims 1 to 4, characterized in that the positioning device makes use of at least one pressurizing member (42) and a link member (41) which penetrates in the drive member (10) and the receiver member (20).

6. A device according to claim 1, characterized in that the receiver member (20) extends a tapped orifice (23) serving to fix the detector device to the drive pivot (1) of the working member.

7. A device according to claim 1, characterized in that the force transmitter (53 or 54) is resilient, and deforms to apply force to the converter (51 or 52).

8. A device according to claim 1, characterized by the fact that the converter is a resistor (52) with the current flowing therethrough varying with varying pressure exerted thereon by the diffuser (54).

9. A device according claims 1 to 8, characterized in that at least the cumulative effect of the first current flowing through the resistor (52) and of a second current of magnitude that can be adjusted arbitrarily by means of a potentiometer (57) is used to increase or to decrease the force to be exerted on the feeler in order to deliver an electric signal acting on the control member.

## Patentansprüche

1. Fühlvorrichtung mit Taster für Pflanzen , der ein elektrisches Signal auslöst zur Steuerung des Steuerorgans eines hydraulischen, pneumatischen oder elektrischen Antrieborgans einer Antriebswelle des Arbeitsorgans aller verwendeten Geräte zur Instandhaltung der Pflanzen oder des Raumes zwischen Pflanzen in allen Bepflanzungen oder Reihenkulturen ,
bestehend aus :
- einem Umwandler (51,52), ein elektrisches Signal liefernd ,
- einem Treiborgan (10) durch einem Fühler (2) verlängert,
- einem Kraftüberträger (53 oder 54) , an dem Treiborgan (10) befestigt zur Betätigung des Umwandlers(51,52) ,
- einer Positionsvorrichtung , um das Treiborgan (10) in Ruhestellung zu halten ,
- einer Rückzugsvorrichtung zur Zurückführung des Treiborgans (10) in seine Ruhestellung ,
- einem Drehbegrenzer ((13,29) zur Begrenzung der Drehbewegung des Treiborgans (10) bei seiner Entfernung aus seiner Ruhestellung ,
- einem Flanschdeckel (7)
- einem Schutzorgan (6) und
- einem Druckflansch (3) ,
dadurch gekennzeichnet , daß sie dazu besteht aus :
- einem zurückziehbarem Stoßdämpferorgan ( 14,42,41,28 ), um die von dem Treiborgan (10 ) und Taster (2) austretende kinetische Energie zu absorbieren ,wenn sie gemeinsam ihre Ruhestellung erreichen ,vorgesehene Hohlräume (14,27),um das Stoßdämpferorgan im Treiborgan ( 10 ) und im Empfangsorgan (20) aufzunehmen ,
- einem Empfangsorgan (20) an einem Befestigungsmittel (30) befestigt , mit der Antriebswelle (1) drehbar, und an dem der Umwandler (51 oder 52 ) befestigt ist, und in dem eines der Mittel , um das Treiborgan (10) in Ruhestellung zu halten vorgesehen ist,und auf das mindestens ein Teil der Rückzugsmittel (28) wirkt,wobei das Treiborgan (10) auf dieses Befestigungsmittel ( 30 ) drehbar gelagert ist ,
- Mitteln (16,43,55,57 ),die die Sensibilität der Fühlvorrichtung zu justieren erlauben .

2. Vorrichtung nach dem Anspruch 1 ,dadurch gekennzeichnet, daß das Befestigungsmittel (30) ein Kupplungsorgan zwischen der Antriebswelle (1) ,dem Treiborgan ( 10) und dem Empfangsorgan (20) ist , koaxial mit diesen letzteren .

3. Vorrichtung nach den Ansprüchen 1 und 2, dadurch gekennzeichnet, daß die Rückzugsvorrichtung sowie das Dämpfungsorgan die selben Mittel (14,42,41,28 ) benützen .

4. Vorrichtung nach dem Anspruch 3 , dadurch gekennzeichnet, daß die sogenannten Mittel mindestens eine Bohreinführung (14 ) , ein Druckorgan ( 42 ) und ein Verbindungsorgan ( 41 ), auf eine schräge Oberfläche ( 28 ) drückend ,aufweisen .

5. Vorrichtung nach den Ansprüchen 1 und 4 ,dadurch gekennzeichnet, daß die Positionsvorrichtung wenigstens ein Druckorgan (42) und ein Verbindungsorgan (41) benutzt , das in das Treiborgan (10) und das Empfangsorgan (20) eindringt .

6. Vorrichtung nach dem Anspruch 1 , dadurch gekennzeichnet ,daß das Empfangsorgan (20) eine Gewindebohrung (23) zur Befestigung der Fühlvorrichtung an der Antriebswelle (1) des Arbeitsorgans aufzeigt.

7. Vorrichtung nach dem Anspruch 1 , dadurch gekennzeichnet ,daß der Kraftüberträger ( 53 oder 54) elastisch ist, und daß er sich verformt, um den Umwandler ( 51,52 ) zu aktivieren .

8. Vorrichtung nach dem Anspruch 1 , dadurch gekennzeichnet ,daß die Tatsache ,daß der Umwandler ein Widerstand (52) ist , der den Wert des Stroms ,der ihn durchquert ,variieren sieht,wenn der Druck,den der Verteiler (54 ) auf ihn ausübt ,variiert.

9. Vorrichtung nach den Ansprüchen 1 und 8 ,dadurch gekennzeichnet, daß man mindestens die Zusammenwirkung eines ersten , den Widerstrand (52) durchquerenden Stromes benutzt mit einem zweiten Strom,dessen selbst gewählter Wert,mit Hilfe eines Potentiometers (57), angepasst werden kann zur Steigerung und Verminderung der Kraft, die auf den Taster (2) auszuüben ist , um ein elektrisches Signal auszulösen , das auf das Steuerorgan wirkt.
